# EUROPEAN PATENT SPECIFICATION

(11) **EP 2 455 766 B1**
(45) Date of publication and mention of the grant of the patent: **19.06.2019**
(21) Application number: 10192035.3
(22) Date of filing: 22.11.2010
(51) Int. Cl.: G01N 35/10

(54) **Temporary Store**
Übergangsspeicher
Stockage temporaire

(43) Date of publication of application: 23.05.2012
(73) Proprietor: F. Hoffmann-La Roche AG, 4070 Basel (CH); Roche Diagnostics GmbH, 68305 Mannheim (DE)
(72) Inventor: Rinderknecht, Markus, 6043 Adligenswil (CH); Gisler, Andreas, 8800 Thalwil (CH); Huesler, Robert, 6037 Root (CH); Schnieper, Urs, 6043 Adligenswil (CH); Knobel, Rolf, 6343 Rotkreuz (CH); Frank, Paul, 6373 Ennetbuergen (CH)
(74) Representative: Herren, Barbara

(56) References cited:
- EP-A2- 1 808 699
- WO-A1-2009/142087
- JP-A- 2000 310 643
- US-A- 4 338 279
- US-A1- 2004 253 146
- US-A1- 2005 014 285
- US-A1- 2009 035 867
- US-A1- 2010 114 501
- US-A1- 2010 203 573
- US-A1- 2010 248 346

## Description

The present invention relates to a method for detecting or quantitating an analyte in a sample.

### Background

Automated analyzers are commonly used diagnosing conditions in individuals, or for testing pools of samples from one or multiple individuals. For analyzing an analyte in a sample, reagents are required. Such reagents have to be provided to the analyzer and distributed within the analyzer. Therefore, reagents are commonly kept in reagent cassettes which can be loaded or unloaded into or from the analyzer. Frequently, such reagents are temperature sensitive. In some analyzers, reagents are only loaded for a single load and then manually retrieved and transferred into a refrigerator. Analyzers are also known with onboard cooled storage.

US 2009/035867 A1 discloses an automatic analyzer with multiple modules, and a long term storage for reagent cassettes which may refrigerate the reagents. The long term storage is connected to the analyzer via a conveyor. The loading of reagent cassettes occurs on the side of the long term storage opposite the conveyor. Furthermore, each of the analyzer modules contains one or more circular reagent storage units located in the center of a dispensing carousel.

US 2004/253146 A1 discloses an automated analyzer with reagent carousels. D2 does not disclose any cooling.

WO 2009/142087 A1 discloses an analyzer with a regent container carousel. D3 discloses a cooled reagent storage. However, the reagents are accessible in the storage unit to pipettes through holes in the reagent storage.

US 2010/248346 A1 discloses an automated analyzer with a single reagent storage unit. D4 discloses a refrigerated storage unit which is not a closed reagent store with a closure for input and output of reagents because the reagent containers in the storage unit can be directly accessed by a pipette through an opening in the apparatus.

US 2005/014285 A1 discloses an embodiment of an analyzer in which reagent containers can be moved between different storage units. The storage areas can be refrigerated. Reagent containers in the storage units are all accessible directly to reagent aspiration arms.

US 2010/203573 A1 discloses an analytical instrument with an elevator-type sample plate carrier which can move the plates vertically.

US 2010/114501 A1 discloses measurement and storage of the times a reagent is used in an analyzer to determine how many more times the measurement can be performed with the reagent. Also, the expiration date and elapsed time can be monitored. Information is read from a barcode on the reagent and measurement is done by the controller of the system.

JP 2000 310643 A discloses determining if a reagent is kept in a prescribed temperature range. Acceptance criteria for remaining outside that range in min. are read from a barcode and are also measured. If the predefined time allowed outside the temperature range is exceeded, an error message is displayed.

The present invention relates to an improved storage method for reagents.

### General Description

The present invention relates to a method of presenting a reagent cassette comprising reagents for analyzing an analyte to a pipetting device within an automated analyzer according to claim 1.

### Figure legends

Fig. 1 Workflow of reagent cassettes in analyzer comprising reagent stores.
Fig. 2 View of lower part of analyzer module with stacker and reagent store.
Fig. 3 Closed reagent store
Fig. 4 View of loading of reagent cassette into reagent store
Fig. 5 View of lower part of analyzer module with stackers and temporary store
Fig. 6 View of outside of temporary store
Fig. 7 view of temporary store with open emergency door
Fig. 8 storage and retrieval system of temporary store
Fig. 9 storage and retrieval system of temporary store with reagent cassette
Fig. 10 first schematic view of analytical system
Fig. 11 second schematic view of analytical system
Fig. 12 third schematic view of analytical system

### Description of preferred embodiments

### Temporary Store

The present invention relates to a method of presenting a reagent cassette comprising reagents for analyzing an analyte to a pipetting device within an automated analyzer according to claim 1.

An automated analyzer for isolating and/or analyzing an analyte comprises a unit for transferring a liquid comprises a station for presenting at least one reagent cassette to a pipetting device. The analyzer additionally may comprise a unit for analyzing an analyte. Furthermore, the analyzer also comprises a unit for temporary storage of at least one reagent cassette comprising reagents necessary to isolate and/or analyze said analyte.

The unit for transferring a liquid additionally comprises at least one station for isolating an analyte. Exemplary embodiments for said station for isolating an analyte are described herein. The unit for transferring a liquid and the unit for temporary storage of at least one reagent cassette preferably overlap at least partially. Preferably, said station for presenting at least one reagent cassette to a pipetting device is located within said overlapping area. It is understood that said unit for transferring a liquid comprises at least one pipetting device.

The unit for transferring a liquid additionally comprises at least one station for isolating an analyte. In a further preferred aspect of the present invention, the analyzer additionally comprises a unit for transferring a sample comprising an analyte from a first receptacle to a second receptacle. In a most preferred aspect of the present invention, the analyzer additionally comprises a closed reagent store.

The unit for temporary storage comprises a cooling unit. Further preferred embodiments of said temporary storage unit are disclosed below.

Said closed reagent store are described hereinafter. The cooling unit of said closed reagent store is set to keep the inside temperature of the closed reagent store between a lower specified temperature and an upper specified temperature. Preferred embodiments of said temperatures are disclosed hereinafter.

The closed reagent store is particularly useful since it provides for long term storage of temperature sensitive reagents. Such reagents include, but are not limited to, reagents comprising enzymes, such as polymerases for amplifying nucleic acids, or enzymes for color reactions. The combination of a reagent store for long term storage of reagents and a temporary store according to the present invention is particularly advantageous in an analytical system. This reduces the time during which a reagent cassette and its contents are exposed to temperatures above the storage temperatures to a minimum. In such an analyzer and system, reagent cassettes with reagents can be loaded less frequently, thus increasing walk-away time for the operator. By transferring reagent cassettes from the reagent store to the temporary store, the reagent cassettes are presented to the pipetting device more quickly than if they had to be transferred directly from the reagent store. It allows for placing the reagent store in an area of the analyzer where space is readily available. The dimensions of the temporary storage unit can be reduced to the space necessary to store reagent cassettes required for a current run, thus making it possible to place it in close proximity of the unit for transferring liquids while minimizing the space occupied by the temporary storage unit. This setup is particularly advantageous for a quick and timely presentation of the reagent cassettes to the pipetting device when the respective reagents are needed.

The temporary store has further advantages. It preferably comprises a closed cooling area with a cooling unit. Preferably, said cooling is an active cooling unit. The cooling unit is set to keep the temperature below a threshold temperature. Preferably the threshold temperature is 40°C or lower, more preferably 35°C or 30°C or lower, most preferably 28°C or below 28°C. The cooling unit only has to operate to keep the temperature below such threshold. Thus, less energy is required than for the reagent store. On the other hand, the lifetime of the reagents is optimized because they only are kept in the temporary store as long as they are needed, and are then returned to the reagent store for long-term storage. The exposure to elevated temperature is thus minimized while quick and timely presentation of the reagent cassettes to the pipetting device is maintained.

In one preferred example, the analyzer additionally comprises a handler system for bidirectional transport of said reagent cassette between said closed reagent store and said station for presenting a reagent cassette. Preferably, steps b) to d) are repeated at least once. In a preferred embodiment, said reagent cassette is transferred from said closed reagent store to said temporary storage unit with a handler system.

In one preferred embodiment, said reagent cassette is transferred from said closed reagent store to a first position with a first handler, and from said first position to the temporary store with a second handler.

In a preferred embodiment, the method hereinbefore described additionally comprises the step of transferring said reagent cassette to said closed reagent store for long term storage until the reagent comprised in said reagent cassette is required for a new test, if said reagent cassette is not empty, or transferring said reagent cassette to a consumable waste station. The reagent cassettes are additionally preferably manually loaded into a drawer of said closed reagent store, wherein said reagent cassette is automatically transferred within said closed reagent store.

Further preferred embodiments are as described herein.

Examples of features of the analyzer with which the method of the present invention is realized are described herein.

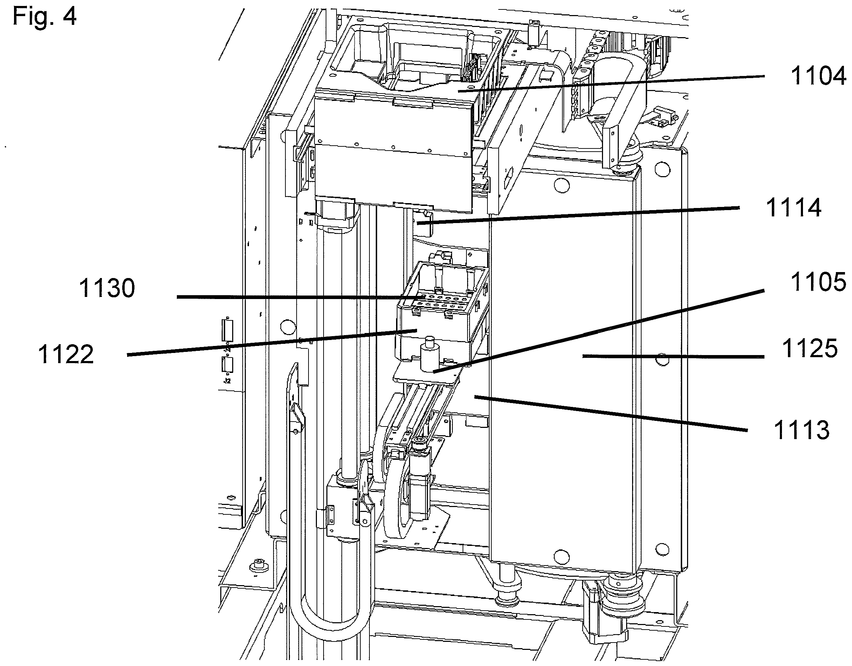

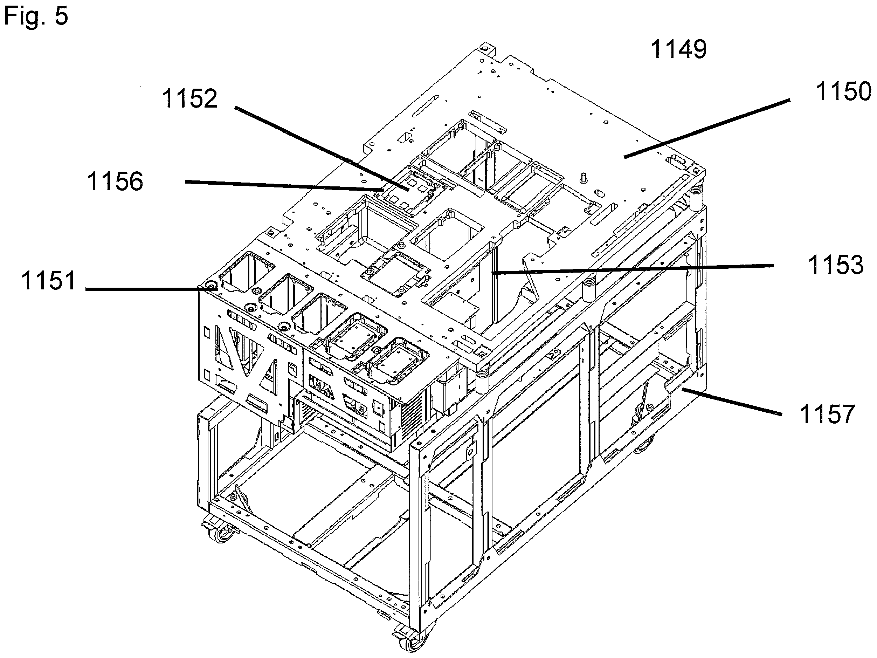

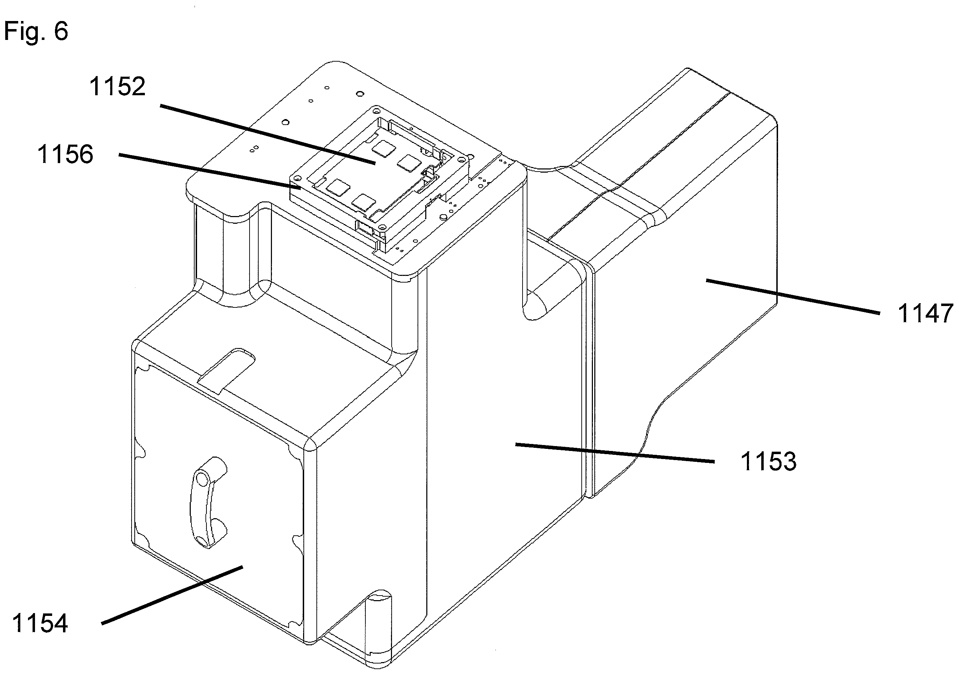

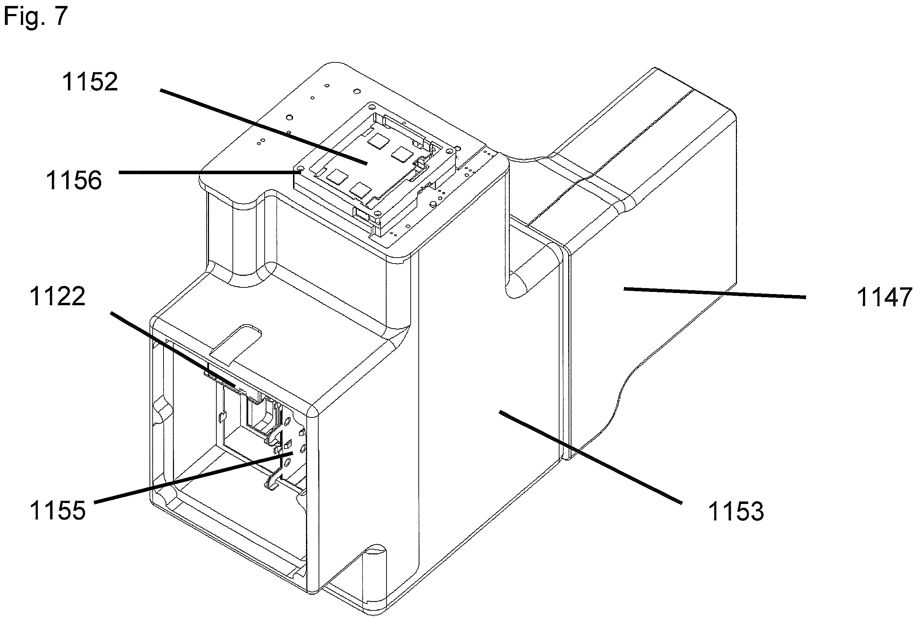

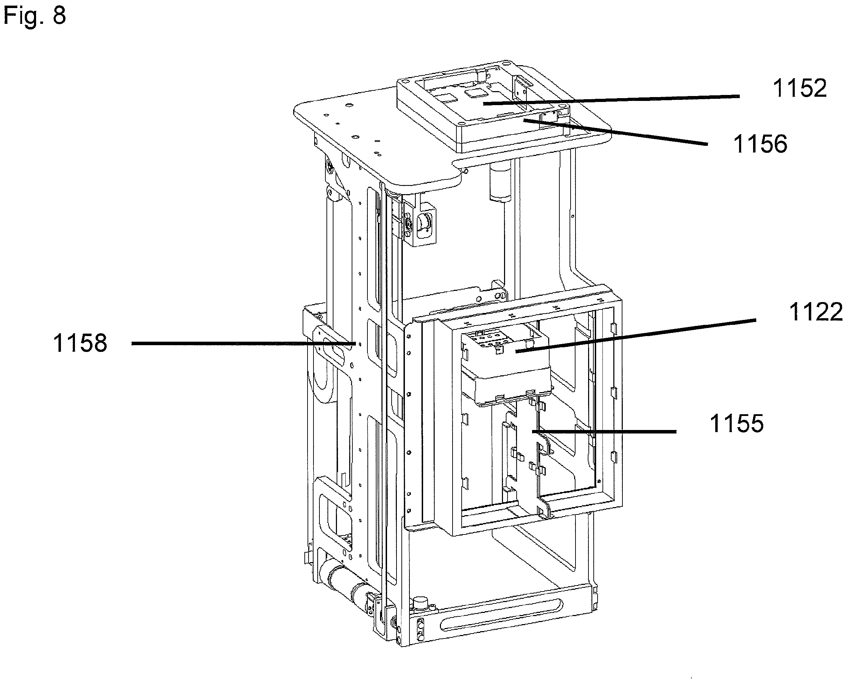

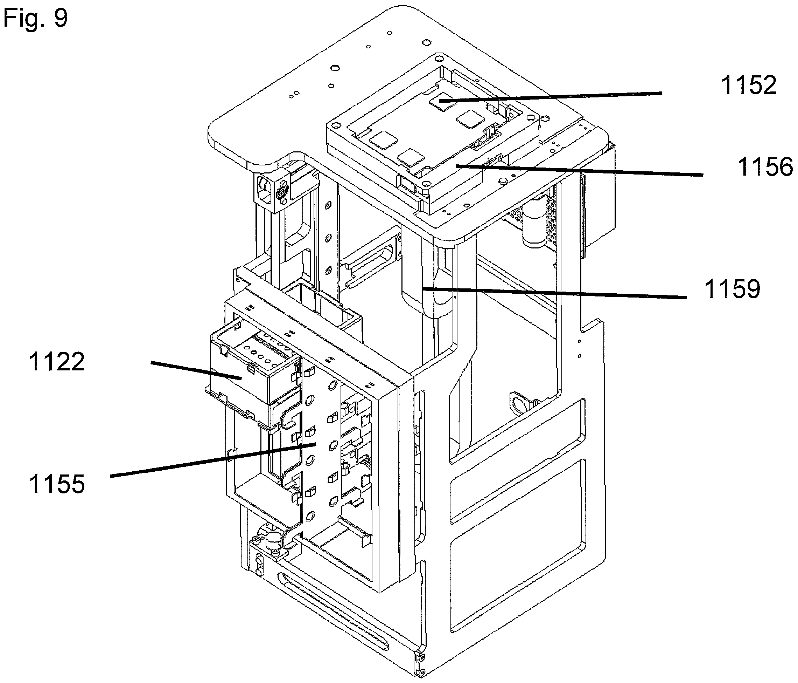

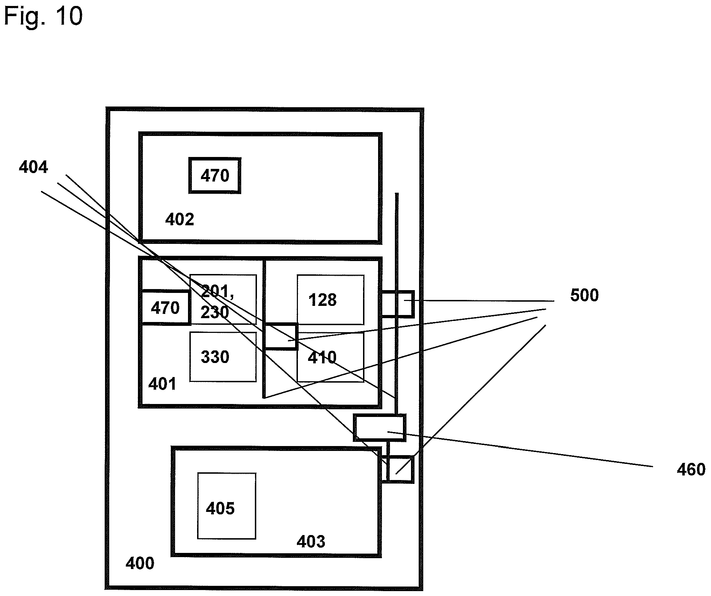

Fig.5 shows a lower part (1149) of a module of an analyzer, preferably a processing module (402) (Fig. 10). The top of the lower part (1149) is a processing plate (1150). The lower part further comprises a frame (1157). A stacker (1151) is also shown. The processing plate (1150) comprises a station (1156) for presenting a reagent cassette (1122) (shown eg in Fig. 4) to a pipetting device and an elevator plate (1152) inside said station for presenting a reagent cassette (1122) to a pipetting device (1156). The elevator plate (1156) can be moved in Z direction. Also shown is the temporary store (1153). Fig. 6 shows a temporary store (1153), the station for presenting a reagent cassette to a pipetting device (1156), and an emergency door (1154) for unloading the store and an air outlet (1147). Fig. 7 shows features as Fig. 6, except that the emergency door (1154) is removed and a holding unit (1155) for holding cassettes (1102) inside the temporary store (1153) and a cassette (1122) can be seen. The inside of the temporary store is shown in Figs 8 and 9. Fig. 8 shows a frame (1158), holding unit (1155), reagent cassette (1122) held in a holding unit, a station (1156) for presenting a reagent cassette (1122) and an elevator plate (1156). In particular, Fig. 9 also shows the elevator (1159).

### Reagent store

The terms "analytical apparatus"(400) and "analyzer" (400) and "analytical instrument" (400) are used interchangeably. An analytical system comprises an analyzer. An analyzer comprises one or more modules or cells or units. Said modules or cells or units comprise stations for carrying out the processing and/or analysis of an analyte.

The term "analyte" as used herein may be any type of biomolecule which is of interest for detection, and the detection thereof is indicative of a diagnostic status of an organism. The organism can be animal or, more preferably, human. Preferred analytes are proteins, polypeptides, antibodies or nucleic acids. More preferably, the analyte is a nucleic acid. The analyte may be present in a liquid sample, or it may be present as a solid sample affixed to a support. Solid samples may include tissue.

The term "detecting" as used herein relates to qualitative measurement of an analyte.

The analyzer of the present invention comprises a unit for transferring a liquid.

The term "liquid" as used herein relates to any type of liquid which has to be transferred during an analytical process. Thus, the term includes liquid samples. It also includes reagents or suspensions of reagents.

The unit for transferring liquids comprises a station for presenting a reagent cassette to a pipetting device. In one preferred example, said unit is a unit or cell or module in which reagents are transferred from said reagent cassette to at least one receptacle. In a more preferred example, said unit comprises a pipetting device for transferring samples from a sample vessel to at least one receptacle, and for transferring control reagents to said at least one receptacle. Preferred examples of pipetting devices, reagent cassettes, receptacles and control reagents are further described hereinafter. In one preferred example, said unit for transferring liquids is a unit for preparing a reaction mixture. In such a unit, reagents are added to an analyte prior to reaction. A reagent cassette can refer to a container comprising a liquid or suspension of reagents. Or a reagent cassette can be a holder for holding containers comprising a liquid or a suspension of reagents.

The analyzer further comprises a unit for isolating said analyte. Preferably, said unit for isolating said analyte and said unit for transferring liquids are located on a processing deck, and more preferably, said closed reagent store is located below said processing deck. A preferred example is also comprised wherein the unit for transferring liquids and the unit for isolating said analyte are merged into one unit.

In a further preferred example, the analyzer additionally comprises a unit for reacting said analyte to obtain a detectable signal. In a more preferred example, said unit for reacting said analyte to obtain a detectable signal also comprises a detection unit. In another more preferred example, said analyzer additionally comprises a separate detection unit.

The term "processing deck" as used herein relates to a deck on which samples are processed. The processing deck may be one deck on which all stations necessary for processing are located. In a system comprising more than one module, the term "processing deck" includes all the decks within the different modules which comprise stations for processing a sample. Thus, the term "processing deck" may also include the different decks in different modules of an analyzer.

In another preferred example, said unit for transferring liquids comprises a separation station for isolating and purifying an analyte. In a preferred example, the station for presenting a reagent cassette to a pipetting device is also disposed on said processing deck. More preferably, the closed reagent store is disposed at a lower level, most preferably below said processing deck. Thus, in a preferred example, the closed reagent store and the station for presenting a reagent cassette to a pipetting device are separate. One advantage is that the space of the analyzer can be used in an optimal way by also using space underneath the processing deck.

Furthermore, the analyzer comprises a closed reagent store for storing reagent cassettes. A closed reagent store is understood to relate to an incubator with a casing, wherein said casing is insulated from the environment and comprises a closure which allows opening and closing the incubator to add or retrieve reagent cassettes. Preferred examples of closures are doors or shutters or, more preferably, a drawer. Said reagent store may additionally be suitable for storing other containers comprising reagents.

Reagents preferably comprise reagents necessary for performing the analysis. Reagents necessary for performing the analysis of analytes include reagents for sample preparation, control reagents, reagents for reacting with the analyte to obtain a detectable signal, and/or reagents necessary for detecting the analyte. Such reagents may include reagents for isolating an analyte and/or reagents for processing a sample and/or reagents for reacting with an analyte to obtain a detectable signal and/or washing reagents and/or diluents.

The closed reagent store comprises a cooling unit for active cooling. The term "active cooling" is understood to mean that the incubator is kept within a predefined range of temperatures. A preferred range of temperatures is between -4°C, preferably -2° or 0°C or 2°C to 10 °C, preferably 8°C or 6°C or 4°C.

Furthermore, it comprises an internal storage and retrieval unit. The preferred internal storage and retrieval system comprises a transport mechanism, preferably an elevator, for transporting a reagent cassette into the reagent store, and storage positions, preferably at least one turntable which preferably comprises centering blocks for positioning reagent cassettes. The elevator preferably comprises a Y-handler.

In order to allow input and output of reagent cassettes, a closure is comprised in the closed reagent store.

The closed reagent store also comprises an identification unit for identifying the contents of a reagent cassette.

For automated transport of the reagent cassettes between the closed reagent store to other stations of the analyzer and back to the reagent store, the analyzer also comprises a transport system for bidirectional transport of said reagent cassette between said reagent store and said station for presenting a reagent cassette. Said system for bidirectional transport may comprise conveyors. In a preferred example, said transport system comprises at least one handler. More preferably, said handler system comprises at least two, preferably at least three handlers.

Handlers and pipetting devices are well known in the art.

In one preferred example of the analyzer described herein, the analyzer comprises a control unit for transferring instructions to said closed reagent store, wherein said instructions specify the reagent cassette required by the system. Such control units preferably comprise processors and are known to the skilled person.

In one preferred example, the store and the temporary store are comprised on the same module of an analyzer. In another preferred example they are comprised on different modules of an analyzer. In one preferred example, the analyzer is a self-contained analyzer with comprising stations within an open space devoid of any spatial separation.

A loading interface is an interface associated with the closure hereinbefore described which receives the reagent cassettes loaded by the operator, a preferred example is the drawer hereinbefore described. Preferably, the operator manually loads the reagent cassettes into the drawer of the closed reagent store. The drawer then automatically closes. The reagent cassettes are identified. In a preferred example, all steps after loading and before retrieval of reagent cassettes are automated.

Said reagent cassettes comprise at least one tag for reading and writing information. Said method comprises storing onboard time on said tag. More preferably, said storing of onboard time on said tag is done when providing said cassettes from said store to said handler system. In one embodiment, said storing of onboard time comprises writing of a time stamp on said tag.

The method additionally comprises determining and storing onboard time. More preferably, said determining and storing onboard time is triggered when providing said reagent cassette from said store to said transport system., Said storing of onboard time is done with a decremental counter before returning said reagent cassette to said reagent store. Further preferred embodiments are described herein.

Thussaid storing of onboard time comprises storing of onboard time with a decrementing counter. The speed of the decrementing counter is increased with increased temperature. Thus, the speed of the decrementing counter is related, more preferably proportional to the difference between the temperature of the area of the presence of the reagent cassette and the reagent store for long term storage. For the embodiment of the onboard time stamp, preferably, said time stamp is then compared with the actual time, an on-board time is calculated based on said time stamp and the actual time, and a cumulated onboard time is calculated and written on said tag before returning said cassette to said reagent store.

It is understood that whenever a process step is described herein which relates to writing an onboard time stamp to track onboard time, the same process step can be replaced with determining onboard time using a counter, such as a decremental counter. An incremental counter is an alternative for counting onboard time.

The term "actual time" is understood to be the time when the respective process step is carried out.

Once reagents are presented to a pipetting device, said reagents are preferably transferred from said reagent cassette held in said station for presenting said reagent cassette to at least one receptacle by a pipetting device.

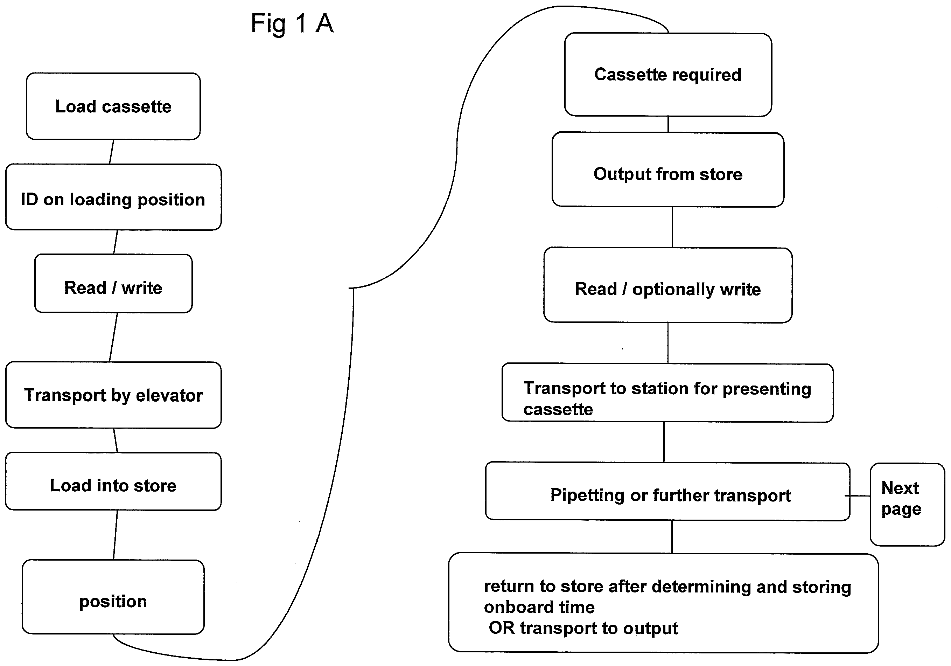

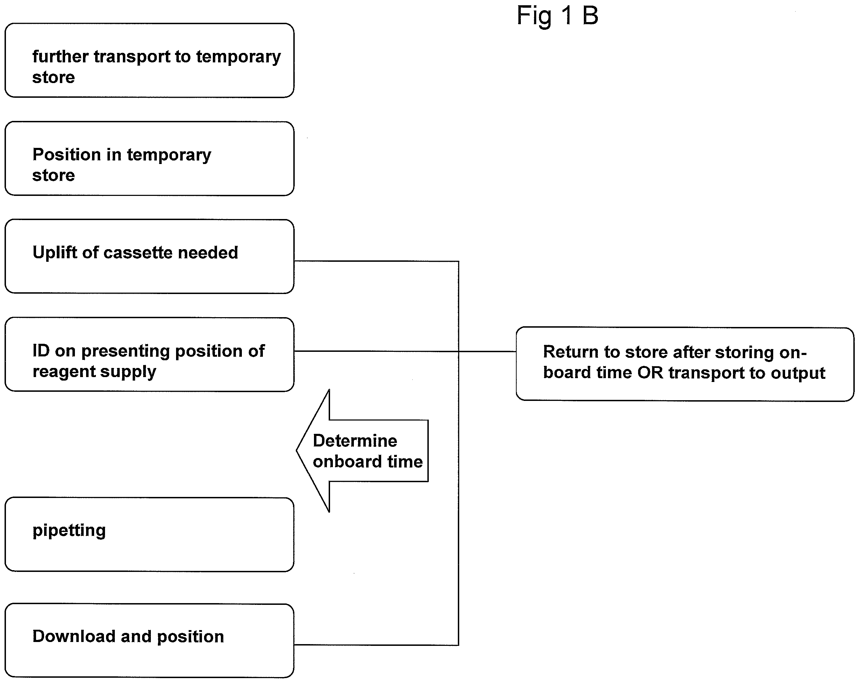

A preferred workflow for the method hereinbefore described is described in more detail in Fig. 1. Reagent cassettes comprise a tag for storing information. Said information comprises information about on-board time in different temperature compartments. Preferably, said tag is an RFID tag. Reagent cassettes are loaded onto the analyzer and stored in the reagent store described herein. A loading flag is written onto the tag upon loading to store the loading date. The control system stores information on the type of reagent or reagents stored in a reagent cassette and the location of the reagent cassette within the store. Upon receipt of information regarding reagents which are required by the analytical system, the handler system retrieves and transports the required cassette or cassettes to a station for presenting a reagent cassette to the analyzer. A counter on the tag is now triggered to decrementally count during time spent outside the reagent store. Alternatively, an onboard time stamp may be written onto the tag. The reagent cassette is now transported either to a station for presenting a reagent cassette to a pipetting device or to the temporary reagent store herein described. If the reagent cassette is transported to a station for presenting a reagent cassette to a pipetting device, the reagent cassette is either returned to the reagent store after use, or is transferred to a waste station. If the reagent cassette is transferred back to the reagent store, an onboard time stamp may be written on the tag. The process may then be repeated.

If the reagent cassette is transported to the temporary store, an onboard time stamp may written onto the tag before placing the reagent cassette in the temporary store, if a time stamp is used to monitor on-board time. With the counter, the decremental counting occurs according to the temperature in the temporary store. The location of the cassette in the temporary store is stored by the control system. If the system requires reagents, the corresponding reagent cassette is transferred to a station for presenting a reagent cassette to a pipetting device. The advantage of the temporary store is that a reagent cassette can be presented to the pipetting device very quickly. While the reagent cassette is located on the station for presenting a reagent cassette, the counter counts faster than in the temporary store if the temperature on the station for presenting a reagent cassette is higher than in the temporary store. The reagent cassette may be returned to the temporary store for re-use or to the reagent store for long time storage. An on-board time stamp is written onto the tag prior to storage in the reagent store. An onboard time counter is updated. The reagent cassette is then stored in the reagent store until it is required again.

If total onboard time exceeds a preset value, if reagent levels in the reagent cassette are too low or if the reagent cassette is erroneous, it is transported to a waste station or to an input/output position for manual removal.

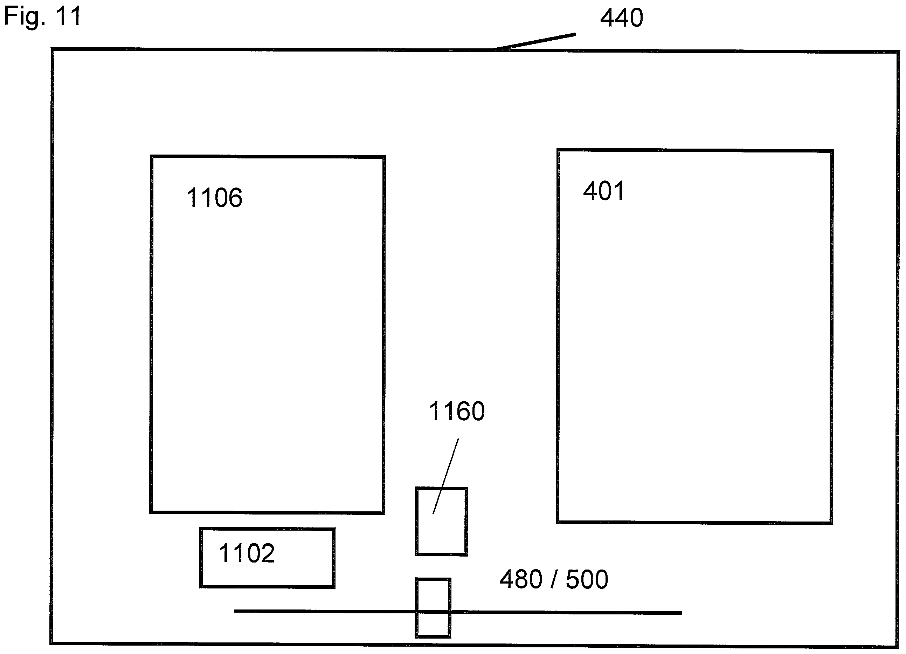

The analytical system herein described, thus, preferably comprises a reading/writing device (1160) (as shown in Fig. 11).

The term "receptacle" as used herein relates to a single vessel (or tube) or to a tube comprised in a multi-tube unit, or to a well (or vessel) of a multiwell plate.

The term "vessel" is understood to mean a single vessel or a single vessel in a multi-tube unit, a multiwell plate or a multi-tube unit or a well of a multiwell plate.

In a preferred embodiment, the reacting comprises generating a detectable signal. More preferably, the method additionally comprises the step of detecting a detectable signal.

The term "reacting" as used herein relates to any type of chemical reaction of the analyte with reagents that is necessary to obtain a detectable signal. Preferably, said reacting comprises amplification. Amplification may be understood as any type of enhancement of a signal. Thus, amplification can be a conversion of a molecule by an enzyme, wherein said enzyme is coupled or bound to the analyte, leading to a detectable signal, wherein more signal molecules are formed than analyte molecules are present. One such non-limiting example is a formation of a chemiluminescent dye, e.g. using ECL. The term amplification further relates to nucleic acid amplification, if the analyte is a nucleic acid. This includes both linear, isothermal and exponential amplifications. Non-limiting examples of nucleic acid amplification methods are TMA, SDA, NASBA, PCR, including real-time PCR. Such methods are well known to the skilled person.

The term "solid support" as used herein relates to any type of solid support to which the analyte is capable of binding, either directly and non-specifically by adsorption, or indirectly and specifically. Indirect binding may be binding of an analyte to an antibody immobilized on the solid support, or binding of a tag to a tag binding compound, e.g. binding of 6xHis tags to Nichelate. When the analyte is a nucleic acid, such indirect binding is preferably by binding to a capture nucleic acid probe which is homologuous to a target sequence of the nucleic acid of interest. Thus, using capture probes attached on a solid support, a target analyte, preferably a target nucleic acid, can be separated from non-target material, preferably non-target nucleic acid. Such capture probe is immobilized on the solid support. Solid support material may be a polymer, or a composition of polymers. Other types of solid support material include magnetic silica particles, metal particles etc.

Preferred non-specific binding of nucleic acid to silica particles occurs in the presence of chaotropic compounds. Such binding may also be referred to as direct binding, as opposed to the indirect binding described above. Preferably, the solid supports are silica particles which comprise a magnetic or magnetizable material.

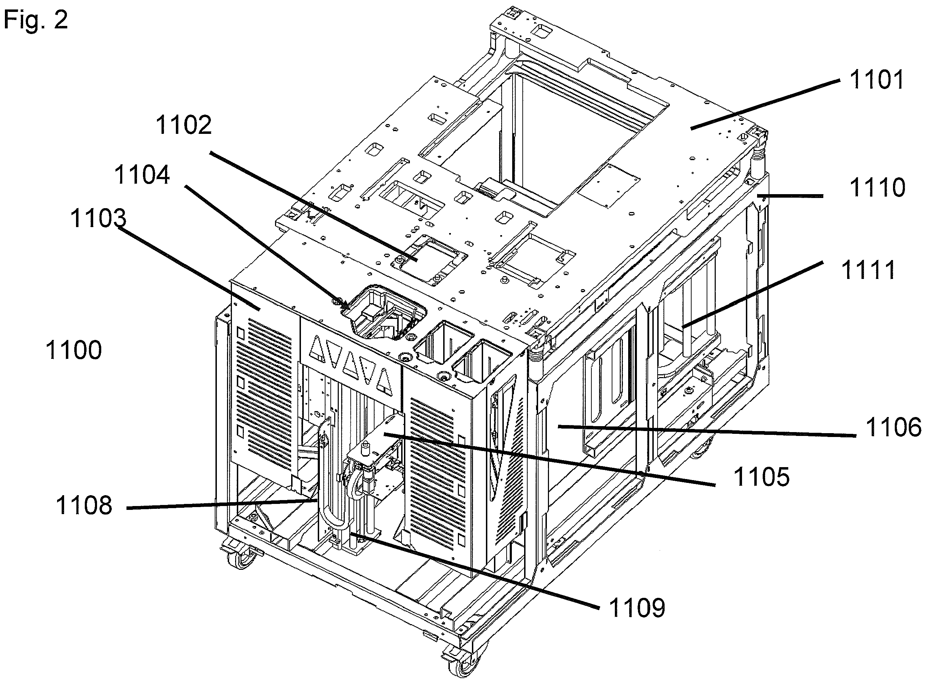

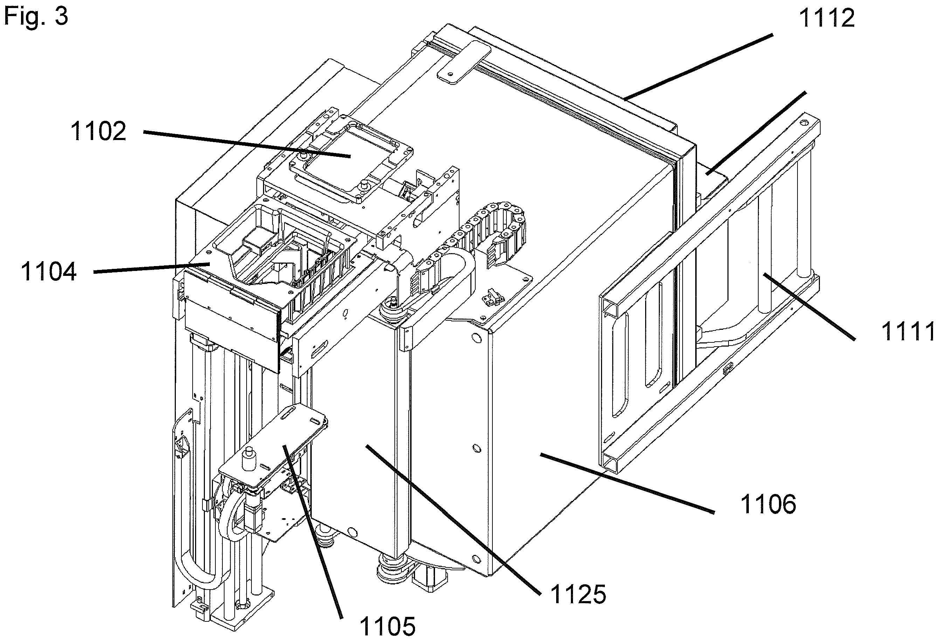

Fig. 2 shows the lower part (1100) of a module of an analyzer. On top is a processing plate (1101). Lower part (1100) comprises a frame (1110). The processing plate comprises a station for presenting a reagent cassette (1102). The housing of a stacker unit is also shown (1103). The stacker unit further comprises a reagent drawer (1104) into which reagent cassettes are loaded. An elevator (1105) then moves the cassette to a level where it can be transferred into the reagent store (1106). The elevator comprises a Y handler (1105) and a Z-axis (1108). The spindle (1109) of the elevator (1105) is also shown. Also visible is an arrangement (1111) for opening a back door of the store (1106). The store (1106) and the back door (1112) as well as the cooling unit (1115) is shown in Fig. 3.

Fig. 4 shows the reagent cassette drawer (1104), the open front door (1125) of the reagent store (1106) and a reagent cassette (1122) comprising reagent inserts (1130). The reagent cassette (1102) is positioned on the Y handler (1105). The Y handler (1105) is about to place the reagent cassette (1102) into the store (1106). The interior of the store (1106) comprises turn tables (1113) on which reagent cassettes (1102) are placed and can be positioned. The turn tables (1113) comprise centering blocks (1114) in which the cassettes (1102) are positioned. A preferred number of centering blocks (1114) is 4 blocks (1114).

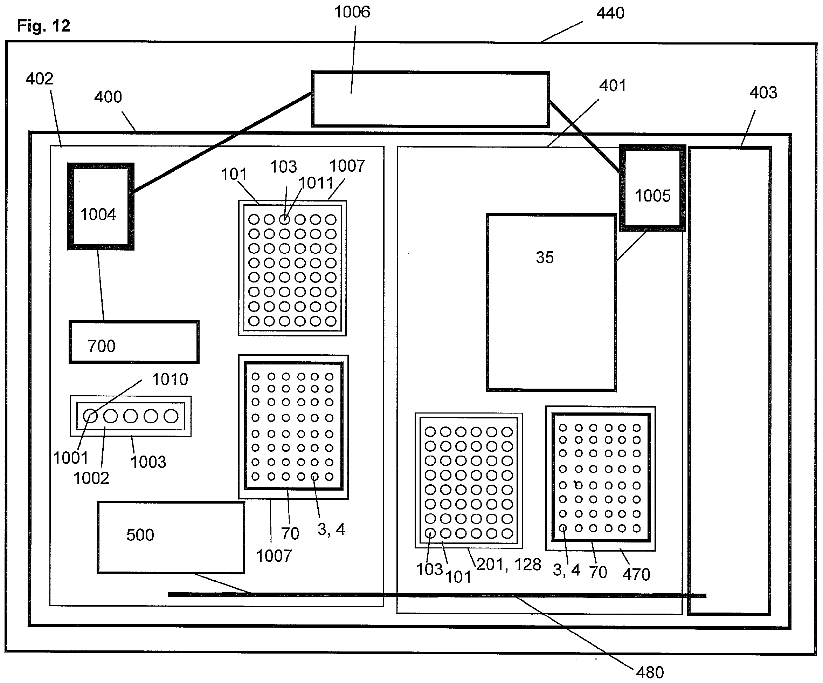

An automated analyzer (400) for use in performing a nucleic acid based amplification reaction is shown in Fig. 12. Said analyzer comprises a plurality of modules (401, 402, 403). One module is a processing module disposed at a first location within the analyzer constructed and arranged to separate a nucleic acid from other material in a sample. Said processing module comprises a separation device as herein described. The analyzer further comprises an amplification module disposed and arranged at a second location within the analyzer. The amplification module comprises a temperature-controlled incubator for incubating the contents of at least one receptacle, preferably of a multiwell plate comprising the separated nucleic acid and one or more amplification reagents for producing an amplification product indicative of the target nucleic acid in the sample.

An analytical system (440) for processing an analyte comprises, according to Fig. 10,
a) a first position comprising first receptacles (1001) in linear arrangement comprising liquid samples (1010), a processing plate (101) comprising receptacles (103) in nxm arrangement for holding a liquid sample (1011), a first pipetting device (700) comprising at least two pipetting units (702) in linear arrangement, wherein said pipetting units (702) are coupled to pipette tips (3, 4), and a tip rack (70) comprising pipette tips (3, 4) in an ax(nxm) arrangement;
b) a second position comprising a holder (201, 128) for said processing plate (101), a holder (470) for said tip rack (70) and a second pipetting device (35), said second pipetting device (35) comprising pipetting units (702) in an nxm arrangement for coupling to pipette tips (3, 4) (Fig. 10). The term "holder" as used herein relates to any arrangement capable of receiving a rack or a processing plate.

The advantages of the analytical system (440) of the present invention are as described above for the method of the present invention.

In one example, the position of said pipetting units (702) of the first pipetting device (700) are variable. Examples of said first pipetting device (700) are described hereinafter.

In one example, the tip rack (70) comprises pipette tips (3, 4) in an ax(nxm) arrangement. In one example, a first type (4) and a second type (3) of pipette tips are comprised in the tip rack (70). In this example, the first type of pipette tips (4) is arranged in an nxm arrangement, and the second type of pipette tips (3) is arranged in the nxm arrangement. In one example, the first type of pipette tips (4) has a different volume than the second type of pipette tips (3), e.g. the volume of the first type of pipette tips (4) is more than 500 ul, and the volume of the second type of pipette tips (3) is less than 500 ul. In this embodiment, a=2. However, examples with more than two types of pipette tips, and thus a >2 are also included..

In one example, the analytical system (440) comprises a control unit (1006) for allocating sample types and individual tests to individual positions of said processing plate (101). In one embodiment, said positions are separate cells (401, 402).

In one example, the system additionally comprises a transfer system (480) for transferring said process plate (101) and said rack (70) between first (402) and second (401) positions. Preferred examples of said transfer system (480) are conveyor belts or, more preferably, one or more handler. Preferred examples of said handler are described hereinafter.

Furthermore, said pipette units of said second pipetting device (35) may be engaged to pipette tips (3, 4) which were used in the first position (402).

An example of the system (440) additionally comprises a third station (403) comprising a temperature-controlled incubator for incubating said analyte with reagents necessary to obtain a detectable signal. A further example of third station (403) is a amplification station comprising a thermoblock. More optimal control of the allocation of samples and tests to the nxm arrangement is achieved with a first processor (1004) which is comprised in said first position (402) to which said control unit (1006) transfers instructions for allocating sample types and individual tests to specific positions in the nxm arrangement of vessels (103) of the process plate (101), and a second processor (1005) which is comprised in said second position (401) to which said control unit (1006) transfers instructions for allocating sample types and individual tests to specific positions in the nxm arrangement of vessels (103) of the process plate.

In one example, said system additionally comprises a first processor located in said first position, and a second processor located in said second position.

In one example, said first processor (1004) controls said first pipetting device (700) and said second processor (1005) controls said second pipetting device (35).

In a preferred example of the analytical apparatus (400) hereinbefore described, said processing module (401) is a module for isolation and purification of an analyte. Therefore, the term "processing" as used herein is understood to relate to isolation and/or separation and/or capture and/or purification of an analyte. Preferably, said apparatus (400) comprises a module for preparing samples for processing (402). Preferably, said apparatus (400) comprises a module for amplification of said analyte (403). In one preferred example, said apparatus additionally comprises a module (404) for transferring amplification reagents from a storage receptacle to a receptacle comprising a purified analyte.

The present disclosure also relates to an automated analyzer (400) for use in performing a nucleic acid based amplification reaction, said analyzer comprising a plurality of modules (401, 402, 403). One module is a processing module disposed at a first location within the analyzer constructed and arranged to separate a nucleic acid from other material in a sample. Said processing module comprises a separation device as herein described. The analyzer further comprises an amplification module disposed and arranged at a second location within the analyzer. The amplification module comprises a temperature-controlled incubator for incubating the contents of at least one receptacle, preferably of a multiwell plate comprising the separated nucleic acid and one or more amplification reagents for producing an amplification product indicative of the target nucleic acid in the sample.

The present disclosure also relates to an analytical system comprising a holding station and a multiwell plate set as described herein. Preferably, said multiwell plate set is fixed in said holding station. Preferably, the multiwell plate comprises a base with a rim which comprises recesses, wherein a positioning and fixing element, preferably a latch-clip on said holding station contacts said recesses, wherein said contact exerts a downwards pressure on the base of the multiwell plate, thereby fixing the multiwell plate in the holding station. Further preferred examples of the analytical system comprise individual or combined features described herein.

The term "module" and "cell" are used interchangeably herein.

## Claims

1. A method of presenting a reagent cassette (1122) comprising reagents for analyzing an analyte to a pipetting device (700, 35) within an automated analyzer (400), wherein said reagent cassette (1122) comprises a tag for storing information, and wherein information of onboard time of the automated analyzer (400) is stored on said tag using a decremental or incremental counter, wherein the speed of the decrementing or incrementing counter is increased with increased temperature, comprising the steps of:
a) loading the reagent cassette (1122) onto the analyzer (400) and writing a loading flag onto a tag upon loading to store the loading date;
b) storing said reagent cassette (1122) in a closed reagent store (1106) for long term storage with active cooling;
c) upon receipt of information regarding reagents which are required by the analytical system (440), retrieving and transporting the required cassette (1122) to a station (1102) for presenting the reagent cassette (1122) to the analyzer (400) using a handler system (480), and triggering a counter on the tag to decrementally or incrementally count time spent outside the closed reagent store (1106);
d) transporting said reagent cassette (1122) to a temporary storage unit (1153), wherein the temporary storage unit comprises a cooling unit;
e) transferring the reagent cassette (1122) required by the system (440) to a station (1156) for presenting a reagent cassette (1122) to a pipetting device (700, 35),
f) returning the reagent cassette (1122) to the temporary storage unit (1153) for re-use, or returning the reagent cassette (1122) to the reagent store (1106) for long time storage;
g) writing an onboard time stamp onto the tag prior to storage in the reagent store (1106);
h) updating the onboard time counter.

2. The method of claim 1, wherein the speed of the decrementing or incrementing counter is related to the difference between the temperature of the area of presence of the reagent cassette (1122) and the reagent store (1106) for long term storage.

3. The method of claim 2, wherein the speed of the decremental or incremental counter is proportional to the difference between the temperature of the area of presence of the reagent cassette (1122) and the reagent store (1106) for long term storage.

4. The method of claims 1 to 3, wherein said reagent cassette (1122) is transferred from said closed reagent store (1106) to a first position (1102) with a first handler, and from said first position (1102) to the temporary store (1153) with a second handler.

5. The method according to any one of claims 1 to 4, additionally comprising the step of
transferring said reagent cassette (1122) to said closed reagent store (1106) for long term storage until the reagent comprised in said reagent cassette (1122) is required for a new test, if said reagent cassette (1122) is not empty, or transferring said reagent cassette (1122) to a consumable waste station.

6. The method according to any one of claims 1 to 5, wherein said reagent cassettes (1122) are manually loaded into a drawer (1151) of said closed reagent store (1106), and wherein said reagent cassette (1122) is automatically transferred within said closed reagent store (1106).

## Patentansprüche

1. Verfahren, um eine Reagenzkassette (1122), die Reagenzien zum Analysieren eines Analyten umfasst, einer Pipettiervorrichtung (700, 35) innerhalb eines automatisierten Analysators (400) zu präsentieren, wobei die Reagenzkassette (1122) ein Etikett zum Speichern von Informationen umfasst und wobei Informationen über die An-Bord-Zeit des automatisierten Analysators (400) auf dem Etikett unter Verwendung eines dekrementellen oder inkrementellen Zählers gespeichert werden, wobei die Geschwindigkeit des dekrementierenden oder inkrementierenden Zählers mit erhöhter Temperatur erhöht wird, umfassend die Schritte:
a) Laden der Reagenzkassette (1122) in den Analysator (400) und Schreiben einer Ladekennzeichnung auf ein Etikett nach dem Laden, um das Ladedatum zu speichern;
b) Lagern der Reagenzkassette (1122) in einem geschlossenen Reagenzspeicher (1106) zur Langzeitlagerung mit aktiver Kühlung;
c) nach Erhalt von Informationen über Reagenzien, die von dem Analysesystem (440) benötigt werden, Auffinden und Transportieren der erforderlichen Kassette (1122) zu einer Station (1102) unter Verwendung eines Handhabungssystems (480), um die Reagenzkassette (1122) dem Analysator (400) zu präsentieren, und Auslösen eines Zählers auf dem Etikett, um die Zeit, die außerhalb des geschlossenen Reagenzspeichers (1106) verbracht wird, dekrementell oder inkrementell zu zählen;
d) Transportieren der Reagenzkassette (1122) zu einer Übergangsspeichereinheit (1153), wobei die Übergangsspeichereinheit eine Kühleinheit umfasst;
e) Überführen der von dem System (440) benötigten Reagenzkassette (1122) zu einer Station (1156), um eine Reagenzkassette (1122) einer Pipettiervorrichtung (700, 35) zu präsentieren,
f) Rückführen der Reagenzkassette (1122) zu der Übergangsspeichereinheit (1153) zur Wiederverwendung, oder Rückführen der Reagenzkassette (1122) in den Reagenzspeicher (1106) zur Langzeitlagerung;
g) Schreiben eines An-Bord-Zeitstempels auf das Etikett vor dem Lagern in dem Reagenzspeicher (1106);
h) Aktualisieren des An-Bord-Zeitzählers.

2. Verfahren nach Anspruch 1, wobei die Geschwindigkeit des dekrementierenden oder inkrementierenden Zählers mit der Differenz zwischen der Temperatur des Bereichs des Vorhandenseins der Reagenzkassette (1122) und des Reagenzspeichers (1106) für die Langzeitlagerung in Beziehung steht.

3. Verfahren nach Anspruch 2, wobei die Geschwindigkeit des dekrementellen oder inkrementellen Zählers proportional zu der Differenz zwischen der Temperatur des Bereichs des Vorhandenseins der Reagenzkassette (1122) und des Reagenzspeichers (1106) für die Langzeitlagerung ist.

4. Verfahren nach den Ansprüchen 1 bis 3, wobei die Reagenzkassette (1122) von dem geschlossenen Reagenzspeicher (1106) zu einer ersten Position (1102) mit einem ersten Handhabungsgerät und von der ersten Position (1102) zu dem Übergangsspeicher (1153) mit einem zweiten Handhabungsgerät überführt wird.

5. Verfahren nach einem der Ansprüche 1 bis 4, zusätzlich umfassend den Schritt des Überführens der Reagenzkassette (1122) zu dem geschlossenen Reagenzspeicher (1106) zur Langzeitlagerung, bis das in der Reagenzkassette (1122) enthaltene Reagenz für einen neuen Test benötigt wird, wenn die Reagenzkassette (1122) nicht leer ist, oder des Überführens der Reagenzkassette (1122) zu einer Verbrauchsmaterial-Abfallstation.

6. Verfahren nach einem der Ansprüche 1 bis 5, wobei die Reagenzkassetten (1122) manuell in eine Lade (1151) des geschlossenen Reagenzspeichers (1106) geladen werden und wobei die Reagenzkassette (1122) automatisch innerhalb des geschlossenen Reagenzspeichers (1106) überführt wird.

## Revendications

1. Procédé de présentation d'une cassette de réactifs (1122) comprenant des réactifs pour l'analyse d'un analyte à un dispositif de pipetage (700, 35) dans un analyseur automatisé (400), dans lequel ladite cassette de réactifs (1122) comprend une étiquette pour le stockage d'informations, et dans lequel les informations relatives au temps embarqué de l'analyseur automatisé (400) sont stockées sur ladite étiquette en utilisant un compteur décrémentiel ou incrémentiel, dans lequel la vitesse du compteur de décrémentation ou d'incrémentation augmente avec l'augmentation de la température, comprenant les étapes de :
a) chargement de la cassette de réactifs (1122) sur l'analyseur (400) et écriture d'un signal de chargement sur une étiquette lors du chargement pour stocker la date de chargement ;
b) stockage de ladite cassette de réactifs (1122) dans une réserve de réactifs (1106) fermée pour un stockage à long terme avec un refroidissement actif ;
c) lors de la réception des informations relatives aux réactifs qui sont requises par le système analytique (440), récupération et transport de la cassette (1122) requise vers un poste (1102) pour présenter la cassette de réactifs (1122) à l'analyseur (400) en utilisant un système de manipulation (480), et déclenchement d'un compteur sur l'étiquette de façon à compter de manière décrémentielle ou incrémentielle le temps passé en dehors de la réserve de réactifs (1106) fermée ;
d) transport de ladite cassette de réactifs (1122) vers une unité de stockage temporaire (1153), dans lequel l'unité de stockage temporaire comprend une unité de refroidissement ;
e) transfert de la cassette de réactifs (1122) requise par le système (440) vers un poste (1156) pour présenter une cassette de réactifs (1122) à un dispositif de pipetage (700, 35),
f) retour de la cassette de réactifs (1122) vers l'unité de stockage temporaire (1153) en vue de sa réutilisation, ou retour de la cassette de réactifs (1122) vers la réserve de réactifs (1106) pour un stockage à long terme ;
g) écriture d'une estampille de temps embarqué sur l'étiquette avant le stockage dans la réserve de réactifs (1106) ;
h) mise à jour du compteur de temps embarqué.

2. Procédé selon la revendication 1, dans lequel la vitesse du compteur décrémentiel ou incrémentiel est liée à la différence entre la température de la zone de présence de la cassette de réactifs (1122) et de la réserve de réactifs (1106) pour un stockage à long terme.

3. Procédé selon la revendication 2, dans lequel la vitesse du compteur décrémentiel ou incrémentiel est proportionnelle à la différence entre la température de la zone de présence de la cassette de réactifs (1122) et de la réserve de réactifs (1106) pour un stockage à long terme.

4. Procédé selon les revendications 1 à 3, dans lequel ladite cassette de réactifs (1122) est transférée de ladite réserve de réactifs (1106) fermée vers une première position (1102) avec un premier dispositif de manipulation, et de ladite première position (1102) vers la réserve temporaire (1153) avec un second dispositif de manipulation.

5. Procédé selon l'une quelconque des revendications 1 à 4, comprenant en outre l'étape de transfert de ladite cassette de réactifs (1122) vers ladite réserve de réactifs (1106) fermée pour un stockage à long terme jusqu'à ce que le réactif compris dans ladite cassette de réactifs (1122) soit requis pour un nouveau test, si ladite cassette de réactifs (1122) n'est pas vide, ou transfert de ladite cassette de réactifs (1122) vers un poste de déchets de consommables.

6. Procédé selon l'une quelconque des revendications 1 à 5, dans lequel lesdites cassettes de réactifs (1122) sont manuellement chargées dans un tiroir (1151) de ladite réserve de réactifs (1106) fermée, et dans lequel ladite cassette de réactifs (1122) est automatiquement transférée dans ladite réserve de réactifs (1106) fermée.
